(19)

**Europäisches Patentamt**
**European Patent Office**
**Office européen des brevets**

(11) **EP 4 651 073 A1**

(12) **EUROPEAN PATENT APPLICATION**
published in accordance with Art. 153(4) EPC

(43) Date of publication:
**19.11.2025 Bulletin 2025/47**

(21) Application number: **23916091.4**

(22) Date of filing: **20.09.2023**

(51) International Patent Classification (IPC):
***G06T 7/00*** (2017.01)

(52) Cooperative Patent Classification (CPC):
**G06T 7/00**

(86) International application number:
**PCT/JP2023/034024**

(87) International publication number:
**WO 2024/150471 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 JP 2023003873**

(71) Applicant: **Astemo, Ltd.**
**Chiyoda-ku,**
**Tokyo 1000004 (JP)**

(72) Inventors:
• **NINOMIYA Takeru**
**Tokyo 100-8280 (JP)**
• **MATONO Haruki**
**Tokyo 100-8280 (JP)**
• **TAKEMURA Masayuki**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **IMAGE PROCESSING DEVICE AND IMAGE PROCESSING METHOD**

(57)     The present invention provides an image processing device and an image processing method capable of improving determination accuracy of matching property with respect to two types of detections. An image processing device includes
a first detection unit, a second detection unit, a mismatch area extraction unit, and a mismatch area analysis unit. The first detection unit detects a target object based on an image outputted from a sensor unit. The second detection unit detects the target object from an image outputted from the sensor unit by processing that differs from processing performed by the first detection unit. The mismatch area extraction unit compares a detection result of the first detection unit and a detection result of the second detection unit, and extracts a mismatch area where the first detection unit detects a target object and the second detection unit fails to detect the object. The mismatch area analysis unit determines the presence or absence of the target object in the mismatch area by allowing the first detection unit and the second detection unit to perform the detections different from each other.

[FIG. 1]

FIG. 1

EP 4 651 073 A1

**Description**

Technical Field

The present invention relates to an image processing device and an image processing method.

Background Art

In recent years, along with the development of image recognition technologies represented by deep learning, performance of a texture-based technique for detecting an object has been largely enhanced. However, there is a possibility that a texture-based technique outputs unintended results based on mismatching between a learned image and a current travelling scene. In view of the above, to suppress an occurrence of a malfunction in a system, it is necessary to determine consistency of texture-based output results.

In order to determine the consistency of the texture-based output result, there has been proposed a technique where a three-dimensional-base detection method is used in combination with the texture bas, and the presence of an object is confirmed from both viewpoints of the texture and the three-dimensional structure. For example, a stereo camera can acquire information on a luminance image and a parallax image (a three-dimensional information) using a single sensor. Accordingly, consistency can be determined by comparing detection results of the texture base and the parallax analysis base (three-dimensional base), and by confirming that the same object can be detected using both techniques.

A technique for determining the presence of an object based on outputs of different techniques is disclosed in, for example, Patent Literature 1. Patent Literature 1 describes a sensor fusion system that detects the same detection target by a plurality of types of detection means (sensors and the like) and comprehensively determines the detection results from the detection means: and a vehicle control device that uses the sensor fusion system. The sensor fusion system described in Patent Literature 1 obtains a product of probability distributions outputted from a plurality of respective output units.

Citation List

Patent Literature

PTL 1: JP 2005-165421

Summary of Invention

Technical Problem

However, when an output of a texture base having high detection performance such as deep learning is compared with an output of a conventional parallax analysis base, there is a case where, although an output result of texture base is detected, an output result based on the parallax analysis base is not detected. In a case where the detection becomes a failure in one out of two techniques, as described in a sensor fusion system described in patent literature 1, it is determined as a failure of detection when the determination is made based on a product of probability distributions. Accordingly, a high detection performance of the texture base cannot be effectively used.

In view of the above-mentioned problems, it is an object of the present invention to provide an image processing device and an image processing method capable of determining the presence or absence of an object with high accuracy using two types of detection results.

Solution to Problem

In order to solve the above problems and achieve the object of the present invention, an image processing device according to an aspect of the present invention includes a first detection unit, a second detection unit, a mismatch area extraction unit, and a mismatch area analysis unit. The first detection unit detects a target object based on an image outputted from a sensor unit. The second detection unit detects the target object from an image outputted from the sensor unit by processing that differs from processing performed by the first detection unit. The mismatch area extraction unit compares a detection result of the first detection unit and a detection result of the second detection unit, and extracts a mismatch area where the first detection unit detects a target object and the second detection unit fails to detect the object. The mismatch area analysis unit determines the presence or absence of the target object in the mismatch area by allowing the first detection unit and the second detection unit to perform the detections different from each other.

Advantageous Effects of Invention

According to an aspect of the present invention, the presence or absence of a target object can be determined with high accuracy using two types of detection results.

Problems, configurations, and advantageous effects other than those described above will be clarified by the description of embodiments made hereinafter.

Brief Description of Drawings

[FIG. 1] FIG. 1 is a schematic configurational block diagram illustrating the configuration of a vehicle on which an image processing device according to a first embodiment is mounted.
[FIG. 2] FIG. 2 is a diagram for explaining the principle of triangulation.
[FIG. 3] FIG. 3 is a diagram for explaining a process of specifying the same distance measurement target from images imaged by left and right cameras according to the first embodiment.
[FIG. 4] FIG. 4 is a diagram for explaining the detection of an object by a texture-based detection unit according to the first embodiment.
[FIG. 5] FIG. 5 is a diagram for explaining the detection of an object by a parallax-analysis-based detection unit according to the first embodiment.
[FIG. 6A, 6B] FIGS. 6A and 6B are views illustrating factors because of which a parallax-analysis-based detection unit according to the first embodiment fails to detect an object;
[FIG. 7A, 7B, 7C] FIGS. 7A, 7B, and 7C are views illustrating processing of a mismatch area extraction unit according to the first embodiment.
[FIG. 8] FIG. 8 is a flowchart illustrating the mismatch area extraction processing according to the first embodiment.
[FIG. 9A, 9B, 9C, 9D] FIGS. 9A, 9B, 9C, 9D are views illustrating processing of the mismatch area analysis unit according to the first embodiment.
[FIG. 10A, 10B] FIGS. 10A, 10B are views illustrating another example of the selection of a size of a matching window according to the first embodiment;
[FIG. 11] FIG. 11 is a flowchart illustrating the mismatch area analysis processing according to the first embodiment.
[FIG. 12] FIG. 12 is a flowchart illustrating the mismatch area analysis processing according to the second embodiment.

Description of Embodiments

1. <First embodiments

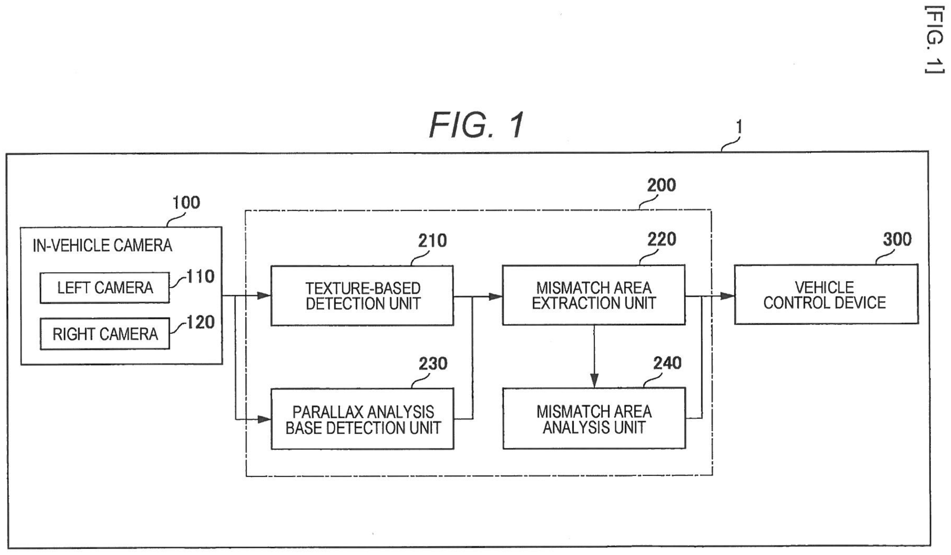

A first embodiment of an image processing device and a method of processing an image will be described with reference to FIG. 1 to FIG. 11. In the drawings, the same reference numerals are given to common parts.

[Configuration example of vehicle]

First, the configuration of a vehicle on which an image processing device according to a first embodiment is mounted will be described with reference to FIG. 1.

FIG. 1 is a schematic configurational view illustrating the configuration of the vehicle on which the image processing device is mounted.

As illustrated in FIG. 1, an in-vehicle camera 100, an image processing device 200, and a vehicle control device 300 are mounted on a vehicle (automobile) 1. The in-vehicle camera 100 indicates a specific example of a sensor unit according to the present invention.

The in-vehicle camera 100 is constituted of a plurality of imaging devices arranged at predetermined intervals. The plurality of imaging devices are installed in a predetermined direction around the vehicle 1, for example, toward the front of the vehicle 1. Hereinafter, the description is made assuming that the in-vehicle camera 100 is a stereo camera system that is constituted of two cameras, that is, a left camera 110 and a right camera 120.

The in-vehicle camera may be a camera system that is constituted of three or more cameras, or a camera system where a plurality of single cameras are combined with each other. Further, the in-vehicle camera may be configured such that a sensor that outputs a luminance image and a sensor that outputs a parallax image are combined to each other.

The left camera 110 and the right camera 120 of the in-vehicle camera 100 image an area in front of the vehicle 1. The left camera 110 and the right camera 120 are arranged in the left-right direction orthogonal to the front-rear direction of the vehicle 1. By using images imaged by the left camera 110 and the right camera 120, the distance to the target can be measured from the principle of triangulation. The in-vehicle camera 100 outputs a luminance image and a parallax image. The images (the luminance image and the parallax image) imaged by the in-vehicle camera 100 is supplied to the image processing device 200.

The image processing device 200 performs image correction processing such as camera calibration and distortion correction with respect to the imaged image. Then, a target object such as an object or a person is recognized based on the image subjected to the image correction processing. The image processing device 200 includes a texture-based detection unit 210, a parallax-analysis-based detection unit 220, a mismatch area extraction unit 230, and a mismatch area analysis unit 240.

The recognition result of the target object obtained by the image processing device 200 is transmitted to the vehicle control device 300. The vehicle control device 300 acquires the recognition result of the target object as information necessary for automatic driving and the like, and controls a traveling state of the vehicle 1. The vehicle control device 300 controls, for example, a braking operation for avoiding contact of the vehicle 1 with an object or a person in front of the vehicle 1, and the vehicle control device 300 controls a steering operation for making the vehicle 1 travel at a speed that follows a speed of another vehicle traveling in front of the vehicle 1, a steering operation making the vehicle 1 travel following a lane of a road on which the vehicle is traveling.

[Principle of Triangulation]

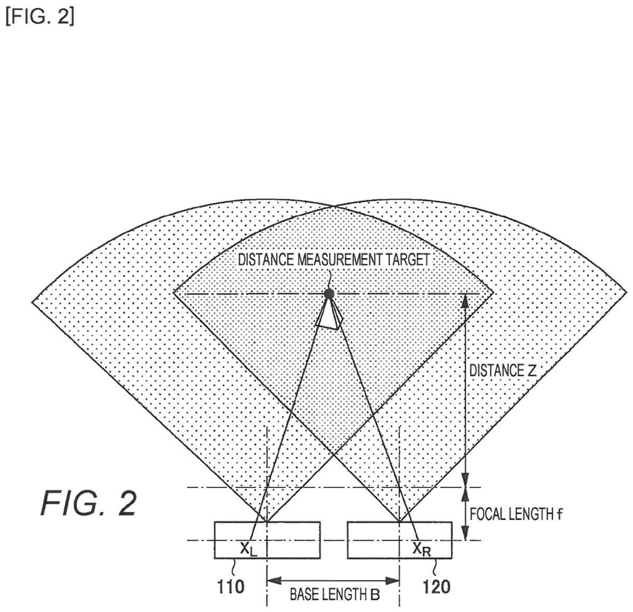

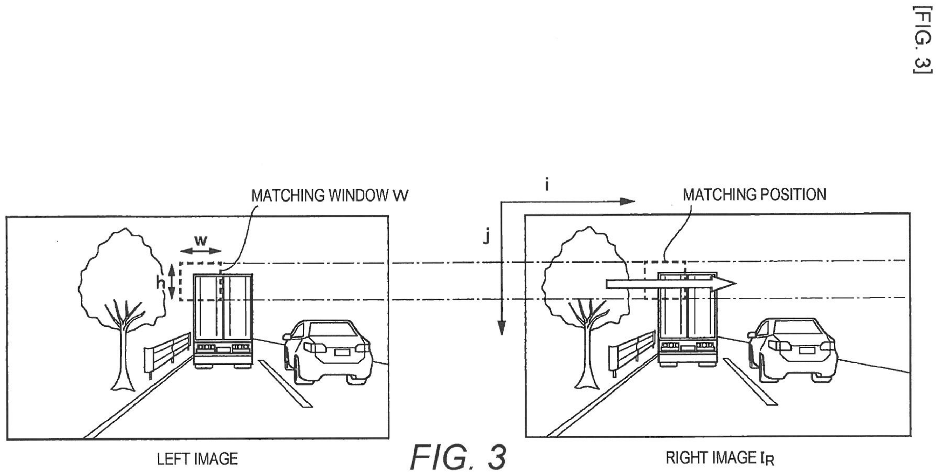

Next, the principle of triangulation used in when measuring a distance to an target will be described with reference to FIG. 2 and FIG. 3.

FIG. 2 is a view for explaining the principle of triangulation. FIG. 3 is a view for explaining a process of specifying the same distance measurement target from images imaged by the left and right cameras 110, 120.

A parallax d, which is the difference between the positions of the same distance measurement target in the images imaged by the left camera 110 and the right camera 120 constituting a stereo camera, is calculated by Formula (1). At this stage of processing, the position where the distance measurement target is imaged by the left camera 110 is denoted by $X_L$, and the position where the distance measurement target is imaged by the right camera 120 is denoted by $X_R$.

[Formula 1]

$$d = X_R - X_L \qquad \cdots (1)$$

Then, a distance Z to the distance measurement target is calculated by Formula (2). In the Formula (2), B is a base length and f is a focal length.

[Formula 2]

$$Z = \frac{B \times f}{d} \qquad \cdots (2)$$

In order to calculate the parallax d by the above-mentioned Formula (1), it is necessary to make an area of the left image imaged by the left camera 110 and an area of the right image imaged by the right camera 120 where the same measurement distance target is imaged are associated with each other. As illustrated in FIG. 3, the association of the areas where the same measurement distant target is imaged is performed by setting a matching window W having a predetermined size in the left image and by specifying an area having the same texture as the matching window from the right image.

Specifically, assuming that a pixel value of the matching window of the left image is W(x, y) and a pixel value of the right image is $I_R$(x, y), the sum of absolute difference (SAD) is calculated using Formula (3) while searching the right image. In such processing, the scanning position is set to i, j. Further, assume a length of the matching window W in the horizontal direction as w, and a length of the matching window W in the vertical direction as h. Here, assume that the vertical direction is the direction orthogonal to the horizontal direction and the depth direction.

[Formula 3]

$$SAD(i,j) = \sum_{x=0}^{w-1} \sum_{y=0}^{h-1} |W(x,y) - I_R(i+x, j+y)| \qquad \cdots (3)$$

Then, the same area can be specified by obtaining the area where the value of SAD becomes minimum. Specifying of the same area is not limited to the case where such specifying is performed using the SAD, and the specifying of the same area may be performed using an arbitrary technique such as a sum of squared difference (SSD) or a normalized cross correlation (NCC).

[Texture-based detection unit]

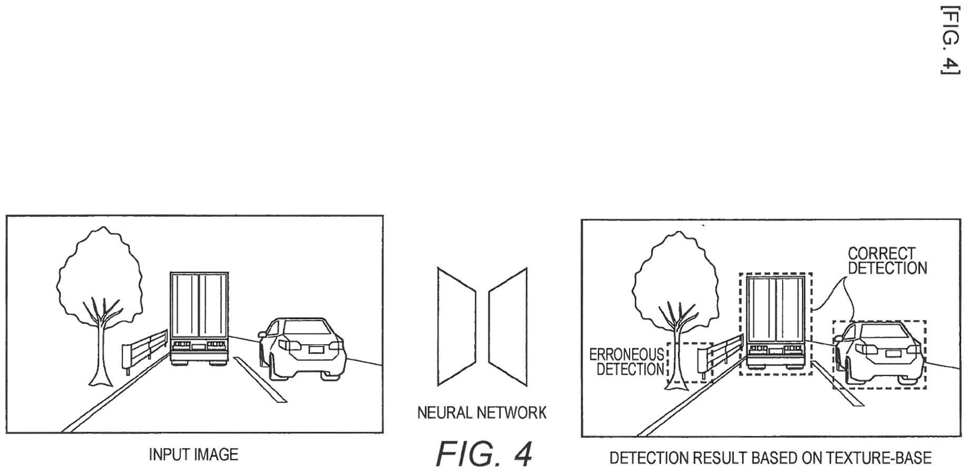

Next, texture-based detection unit 210 will be described with reference to FIG. 4.

FIG. 4 is a view describing the detection of a target object by a texture-based detection unit 210.

The texture-based detection unit 210 detects target objects (other vehicles, pedestrians, two-wheeled vehicles, and other obstacles) based on a luminance image imaged by the in-vehicle camera 100. As illustrated in FIG. 4, the texture-based detection unit 210 inputs an image acquired by the in-vehicle camera 100 to the neural network, and estimates rectangular frames (upper left coordinates, widths, heights) surrounding areas to be detected.

The texture-based detection unit 210 may simultaneously estimate types, distances and moving speeds of the detection targets besides the rectangular frames surrounding the areas of the detection targets. The detection of the target objects by the texture-based detection unit 210 is not limited to the use of the neural network. The texture-based detection unit 210 may use any arbitrary techniques that can detect target objects.

As illustrated in FIG. 4, an output of the texture-based detection unit 210 includes not only correct detection in which targets have been correctly detected but also erroneous detection in which targets have been erroneously estimated. There may be a case where the erroneous detection occurs due to a difference between a learned image and a current scene. Further, there is a possibility that the erroneous detection occurs at a timing that a target having a texture similar to a learned detection target is accidentally recognized. The erroneous detections do not accurately recognize a surrounding environment thus giving rise to a possibility resulting in an erroneous operation of a system. Accordingly, it is necessary to exclude the erroneous detection.

[Parallax-analysis-based detection unit]

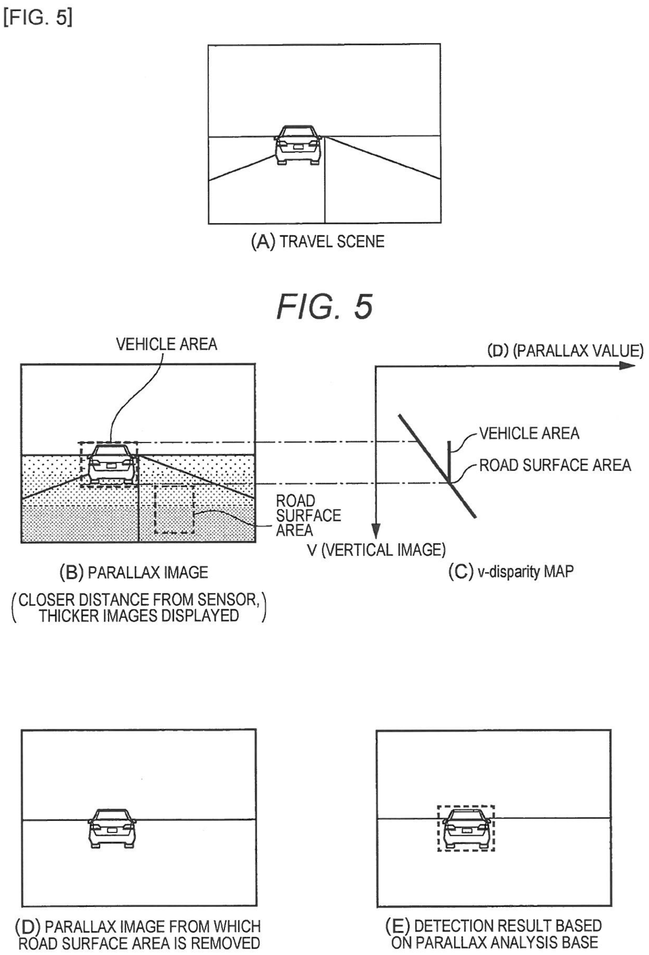

Next, the parallax-analysis-based detection unit 220 will be described with reference to FIG. 5.

FIG. 5 is a view for describing the detection of a target object by the parallax-analysis-based detection unit 220.

The parallax-analysis-based detection unit 220 detects a target object (other vehicles, pedestrians, two-wheeled vehicles, and other obstacles) based on parallax images imaged by the in-vehicle camera 100. In a travel scene illustrated in FIG. 5A, parallax images illustrated in FIG. 5B are outputted from the in-vehicle camera 100 to parallax-analysis-based detection unit 220. A parallax value is stored in each pixel of the parallax image. In the parallax image shown in FIG. 5B, the closer a distance from the vehicle 1, the thicker the color of the parallax is displayed.

In the road surface area of the parallax image, when an image vertical position is changed, a parallax value stored in each pixel is smoothly changed. On the other hand, it is understood that a parallax value having the same value is fixed in a vehicle area. To prepare a v-disparity map in FIG. 5C where a parallax value is taken on a horizontal axis d and an image vertical position is taken on an axis of coordinates, a three-dimensional object such as the vehicle becomes a straight line in the vertical direction, and the road surface area becomes a straight line descending to the right. The road surface model can be estimated by obtaining a straight line parameter descending to the right.

Next, when the parallax that corresponds to the estimated road surface model is removed, the parallax values other than the parallax values of the vehicle can be eliminated as illustrated in FIG. 5D. Then, a rectangular frame is set so as to surround the same parallax existing in the vicinity among the parallax values remaining in the parallax image from which the parallax corresponding to the road surface model has been removed. As a result, as illustrated in FIG. 5E, the vehicle area can be determined.

The parallax-analysis-based detection unit 220 may simultaneously estimate a type, a distance, and a moving speed of the detection target when estimating the rectangular frame (a left upper coordinate, a width, a height) of the target area. Further, the detection of the target object by the parallax-analysis-based detection unit 220 is not limited to the use of the technique of creating the v-disparity map. Any technique that can estimate the area of the detection target may be used.

[Failure of detection by parallax-analysis based detection unit]

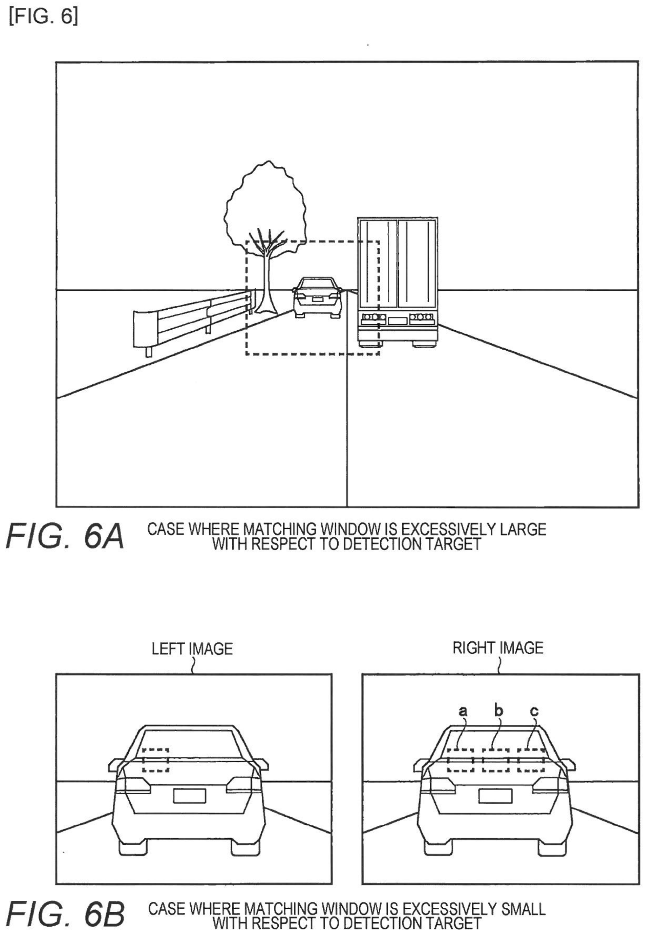

Next, factors which make the detection of a target object by the parallax-analysis-based detection unit 220 non-detective will be described with reference to FIGS. 6A and 6B.

FIGS. 6A and 6B are views illustrating factors because of which a parallax-analysis-based detection unit 220 fails to detect a target object.

FIG. 6A illustrates a case where the matching window for parallax calculation is excessively large with respect to a matching window for the detection target. In a case where the matching window is larger than the detection target, there is a possibility that other objects around the target object are included in the matching window in addition to the target object whose parallax is to be calculated.

In FIG. 6A, the parallax with respect to a vehicle remote from an own vehicle is calculated. However, the matching window is so large that street trees and tracks surrounding the remote vehicle are included in the same matching window. With the use of the parallax calculation method (see FIG. 3) described above, when the objects disposed at different distances from the own vehicle are embraced within the matching window as illustrated in FIG. 6A, the accurate parallax cannot be calculated.

In a case where the parallax cannot be accurately calculated, the presence of the vehicle cannot be detected even when the above-mentioned technique that prepares a v-disparity map (see FIG. 5) is used. Accordingly, the detection of the target object using the parallax-analysis-based detection unit 220 fails to detect the target object.

FIG. 6B illustrates a case where the matching window is excessively small with respect to the detection target. When the area as same as the matching window set in the left image imaged by the left camera 110 is searched from the right image imaged by the right camera 120, if the matching window is too small, there may be a case where the same pattern may locally appear.

As illustrated in FIG. 6B, the texture in the matching window set in the left image and areas a, b, and c in the right image have completely the same texture. As a result, the parallax-analysis-based detection unit 220 cannot calculate the parallax. As a result, the detection of the target object using the parallax-analysis-based detection unit 220 fails to detect the target object.

As described above, when the parallax- analysis-based detection unit 220 fails to detect the target object, a mismatch area is formed where although the texture-based detection unit 210 detects the target object, the parallax-analysis-based detection unit 220 does not detect the corresponding target object.

[Mismatch area extraction unit]

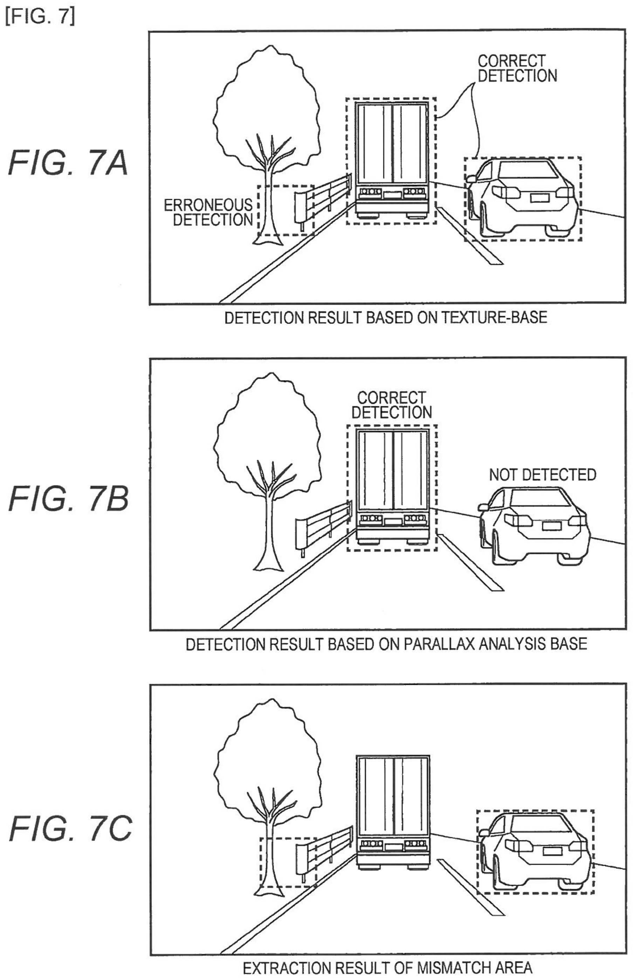

Next, a mismatch area extraction unit 230 will be described with reference to FIG. 7A, FIG. 7B and FIG. 7C.

FIGS. 7A, 7B, and 7C are views illustrating processing performed by a mismatch area extraction unit.

The mismatch area extraction unit 230 receives an output of the texture-based detection unit 210 and an output of the parallax-analysis-based detection unit 220. Information on the target object detected by both detection units 210,220 is outputted to the vehicle control device 300 as it is. On the other hand, in a case where the parallax-analysis-based detection unit 220 has not detected a target object detected by the texture-based detection unit 210 (in the case where the parallax-analysis-based detection unit 220 failed to detect such a target object), a possibility is considered that the texture-based detection unit 210 has erroneously detected the target object. A possibility is also considered that the parallax-analysis-based detection unit 220 has failed to detect the target object (undetected the target object).

In a case where the parallax-analysis-based detection unit 220 has not detected the target object that the texture-based detection unit 210 has detected, the mismatch area extraction unit 230 extracts the area detected by the texture-based detection unit 210 as a mismatch area. The mismatch area extraction unit 230 outputs the extracted mismatch area to the mismatch area analysis unit 240.

FIG. 7A illustrates a detection result of the texture-based detection unit 210. In FIG. 7A, the detected target object is displayed in a rectangular frame indicated by a broken line. With the use of a highly accurate recognition technique as represented by deep learning, it is possible to accurately detect a detection target (target object) such as a vehicle or a truck illustrated in FIG. 7A. On the other hand, there is a possibility of occurrence of erroneous detection where, due to a mismatch between a learned image and a current traveling scene of a vehicle, a rectangular frame is outputted even though a detection target does not exist.

FIG. 7B illustrates a detection result obtained by the parallax-analysis-based detection unit 220. In FIG. 7B, a detected target object is displayed in a rectangular frame indicated by a broken line. The parallax-analysis-based detection unit 220 can detect a three-dimensional object having a height that differs from a height of a road surface. However, there is a possibility that the parallax-analysis-based detection unit 220 cannot detect (may fail to detect) such a detection target depending on the detection target. As described above, as a cause of the failure of detection, for example, a case is named where a size of the matching window when a parallax is calculated is not suitable for a size of a detection target object on a screen so that the parallax cannot be accurately calculated.

[Mismatch area extraction processing]

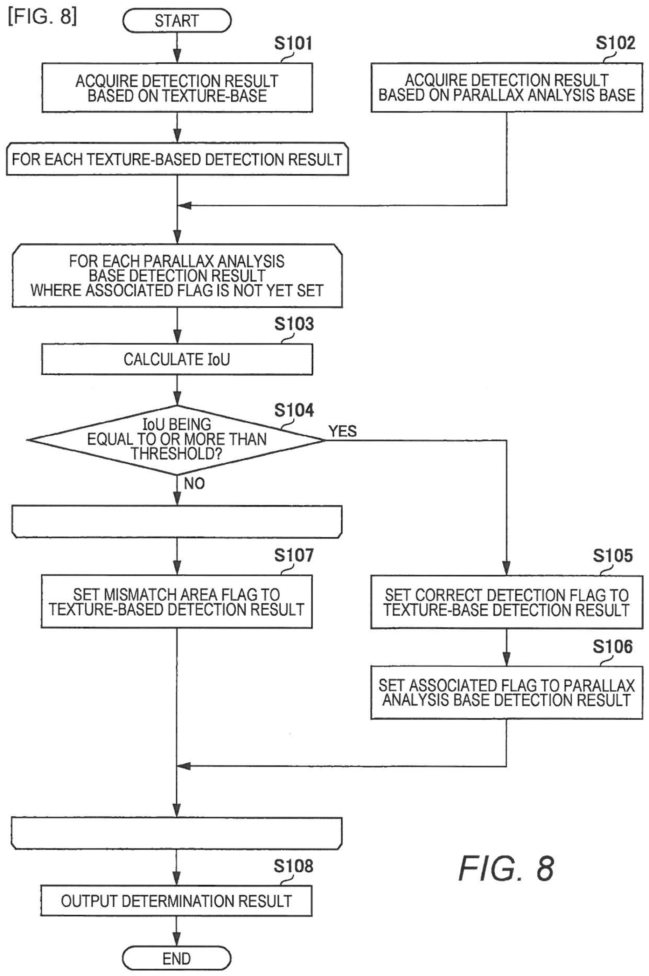

Next, mismatch area extraction processing performed by the mismatch area extraction unit 230 will be described with reference to FIG. 8.

FIG. 8 is a flowchart illustrating the mismatch area extraction processing.

First, the mismatch area extraction unit 230 acquires a detection result of the texture-based detection unit 210 (hereinafter referred to as "texture-based detection result") (S101). Further, the mismatch area extraction unit 230 acquires the detection result of the parallax-analysis-based detection unit 220 (hereinafter referred to as "parallax-analysis-based detection result") (S102).

Next, the mismatch area extraction unit 230 calculates an intersection over union (IoU) with respect to the texture-based detection result and the parallax-analysis-based detection result (S103). Subsequently, the mismatch area extraction unit 230 determines whether or not the value of the IoU is equal to or more than a threshold set in advance (S104). The processing in step S103,104 is performed for each parallax-analysis-based detection result to which the associated flag is not set.

In a case where the texture-based detection result and the parallax-analysis-based detection result detect the same target object, most of the rectangular frame outputted by the texture-based detection unit 210 and most of the rectangular frame outputted by the parallax-analysis-based detection unit 220 overlap with each other. Accordingly, when the value of IoU is equal to or more than a threshold set in advance, it can be determined that the same target object is detected in the texture-based detection result and the parallax-analysis-based detection result.

On the other hand, when there is no combination of the texture-based detection result and the parallax-analysis-based detection result where the value of IoU is equal to or more than the threshold set in advance, it can be determined that, although the texture-based detection unit 210 detects the target object, the parallax- analysis-based detection unit 220 does not detect the associated target object.

The texture-based detection unit 210 and the parallax-analysis-based detection unit 220 may output a type, a distance, a moving speed and the like of the target object. In this case, in step S104, it may be determined whether or not the target object is the same target object, including not only the value of IoU but also information such as the type, the distance, and the moving speed of the target object.

When determining that the value of IoU is greater than or equal to the predetermined threshold in step S104 (YES in S104), the mismatch area extraction unit 230 sets a correct detection flag to the texture-based detection result to be determined (S105). Then, the mismatch area extraction unit 230 sets an associated flag to the disparity analysis based detection result to be determined (S106).

In step S104, when it is determined that the value of the IoU is equal to or more than the threshold set in advance (determination NO in S104), the mismatch area extraction unit 230 sets a mismatch area flag to the texture-based detection result of the determination target (S107). The processing in steps S103 to S107 is performed for each texture-based detection result.

Thereafter, the mismatch area extraction unit 230 outputs a determination result (S108). That is, the mismatch area extraction unit 230 outputs the texture-based detection result in which a correct detection flag is set to the vehicle control device 300. Further, the mismatch area extraction unit 230 outputs the texture-based detection result in which the mismatch area flag is set to the mismatch area analysis unit 240. After the processing of S108 is finished, the mismatch area extraction unit 230 finishes the mismatch area extraction processing.

In the present embodiment, the determination of the mismatch area is performed with respect to all texture-based detection results. On the other hand, in an image processing device mounted on a moving body such as an in-vehicle field, since a calculation resource is limited, there may be a case where it is difficult to determine a mismatch area with respect to all texture-based detection results. In this case, the determination of the mismatch area may be performed by limiting the detection result to the detection result with high priority (for example, a detection result with a priority higher than a predetermined order). As a result, an amount of processing that the mismatch area extraction unit 230 performs can be reduced.

The priority can be determined based on, for example, at least one of a distance to the vehicle 1, a relative speed, a time until collision, a distance to a predicted traveling path of the vehicle 1, a past tracking result, and the like with respect to the texture-based detection result.

[Mismatch area analysis unit]

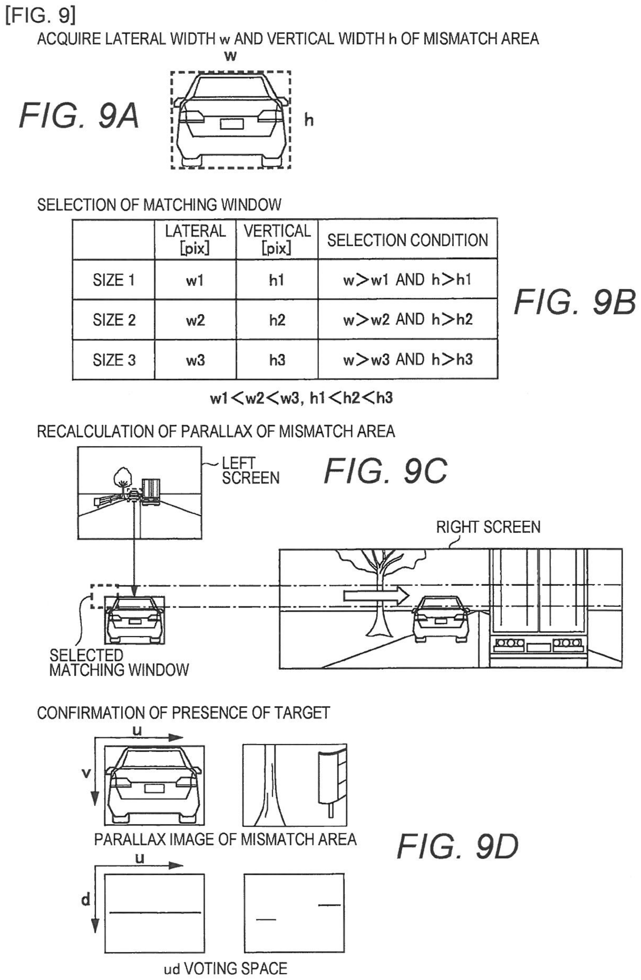

Next, the mismatch area analysis unit 240 will be described with reference to FIGS. 9A, 9B, 9C and 9D.

FIGS. 9A, 9B, 9C and 9D are views illustrating processing of the mismatch area analysis unit.

The mismatch area analysis unit 240 determines whether the mismatch area outputted by the mismatch area extraction unit 230 attributed to the erroneous detection by the texture-based detection unit 210 or non-detection by the parallax- analysis-based detection unit 220.

FIG. 9A illustrates the mismatch area outputted by the mismatch area extraction unit 230. The mismatch area analysis unit 240 acquires a lateral width w that is a horizontal length of the mismatch area, and a vertical width h that is a vertical length of the mismatch area. Assume that the vertical direction is the direction orthogonal to the horizontal direction and the depth direction.

FIG. 9B illustrates a size of the matching window set based on the lateral width w and the vertical width h of the mismatch area. As illustrated in FIG. 9B, the size of the matching window includes, for example, a size 1, a size 2 and a size 3. The lateral width w2 and the vertical width h2 of the size 2 are larger than the lateral width w1 and the vertical width h1 of the size 1. The lateral width w3 and the vertical width h3 of the size 3 are larger than the lateral width w2 and the vertical width h2 of the size 2.

With respect to the sizes 1 to 3, a window having the maximum size where the vertical width and the lateral width do not exceed the vertical width h and the lateral width w of the mismatch area is selected as the matching window. Accordingly, corresponding to the size of the mismatch area, a window having an appropriate size can be selected as the matching window. The number of matching windows prepared in advance according to the present invention is not limited to three (three types), and any number (types) of sizes can be set.

FIG. 9C illustrates an example of calculating the parallax of the mismatch area. The mismatch area analysis unit 240 searches the same area as the mismatch area in the right image using the set size of the matching window, and calculates the parallax. In this case, the parallax is not obtained using the entire left image as a reference, and the parallax is calculated by limiting the area to the mismatch area. Accordingly, it is possible to reduce processing that the mismatch area analysis unit 240 performs.

Further, in a case where the texture-based detection unit 210 outputs information on the distance to the target object, the mismatch area analysis unit 240 can obtain the information on the distance to the target object in the mismatch area. Accordingly, the mismatch area analysis unit 240 can predict the position of the target imaged on the right image by converting the distance to the target object that the texture-based detection unit 210 detects to the parallax. Then, the mismatch area analysis unit 240 scans the matching window only within a range of $\pm\alpha$ from the predicted target position. Accordingly, the search range can be limited, and hence, it is possible to reduce processing that the mismatch area analysis unit 240 performs.

FIG. 9D illustrates an example of determining whether the mismatch area is a detection target or the detection of the mismatch area is an erroneous detection. The mismatch area analysis unit 240 determines whether the mismatch area is a detection target or the detection of the mismatch area is an erroneous detection based on a calculated parallax. Specifically, a prepared parallax image is plotted in an ud voting space where an image lateral direction u is taken on an axis of abscissas and a parallax d is taken on an axis of ordinates. In this case, with respect to a three-dimensional object where the same parallax extends continuously in the vertical direction, many votes are gathered at the position of a specified parallax d compared to an area (a road surface or the like) where a three-dimensional object does not exist.

In view of the above, the mismatch area analysis unit 240 confirms whether pixels in which votes equal to or more than a vote threshold set in advance exist for each u column of the ud voting space, and counts the number of u columns where votes equal to or more than the vote threshold are gathered. Then, in a case where a rate of the u columns where votes equal to or more than the vote threshold is equal to or more than a predetermined threshold in all u columns, the mismatch area analysis unit 240 determines that the mismatch area is a detection target. That is, the mismatch area analysis unit 240 determines that a detection result of the texture-based detection unit 210 is correct and the mismatch area is a target object.

On the other hand, a rate of the u columns where votes equal to or more than the vote threshold are gathered is less than the predetermined threshold in all u columns, the mismatch area is not a detection target. Accordingly, the mismatch area analysis unit 240 determines that the detection performed by the texture-based detection unit 210 is an erroneous detection. The determination of the presence of a three-dimensional object that forms a target is not limited to the determination performed using the above-mentioned technique, and the determination may be performed using an arbitrary technique.

[Other examples of selection of size of matching window]

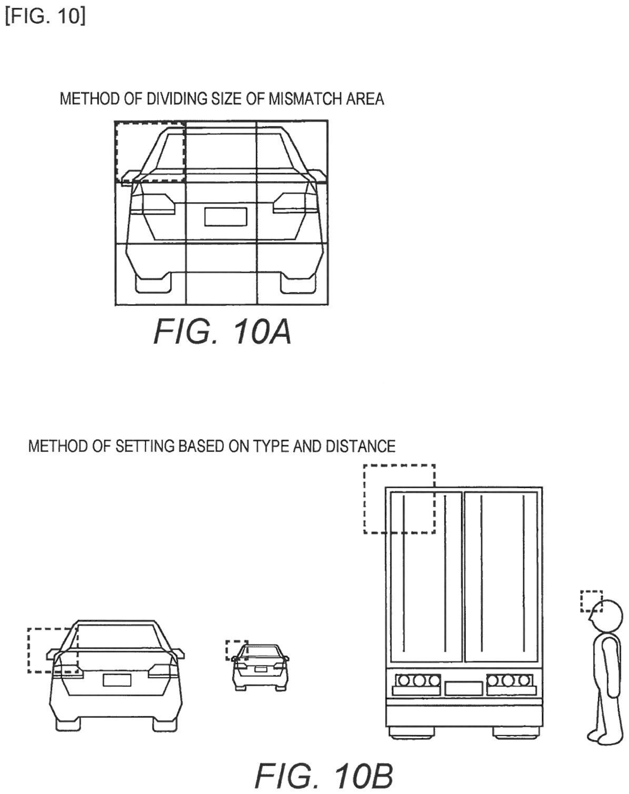

Next, the description is made with respect to other examples of the selection of the size of the matching window with reference to FIG. 10A and FIG. 10B.

FIG. 10A and FIG. 10B are views describing other examples of the selection of the size of the matching window.

FIG. 10A illustrates an example where a size of one area obtained by dividing a mismatch area in three in the horizontal direction and the vertical direction (longitudinal and lateral) respectively is set as a size of the matching window. The number of division of the mismatch area is not limited to three, and may be two, four, or more. The number of divisions of the mismatch area may be different numbers between the horizontal direction and the vertical direction. Further, an upper limit and a lower limit may be set with respect to sizes obtained by dividing the mismatch area.

FIG. 10B illustrates an example where the size of the matching window is set based on the type of the mismatch area and the distance to the vehicle 1. In a case where the type of the target object and the distance to the vehicle 1 detected by the texture-based detection unit 210 are estimated, the mismatch area analysis unit 240 can obtain information on the type of the target object in the mismatch area and the information on the distance to the vehicle 1.

If the type of the target object and the distance to the vehicle 1 are known, the size of the target object imaged on the image can be predicted. Accordingly, the size of the matching window is determined in advance for each combination of the type of the target object and the distance to the vehicle 1, and a table or a map is stored in a storage unit. The mismatch area analysis unit 240 references the table or the map stored in the storage unit, and determines the size of the matching window based on the type of the target object and the distance to the vehicle 1.

[Mismatch area analysis processing]

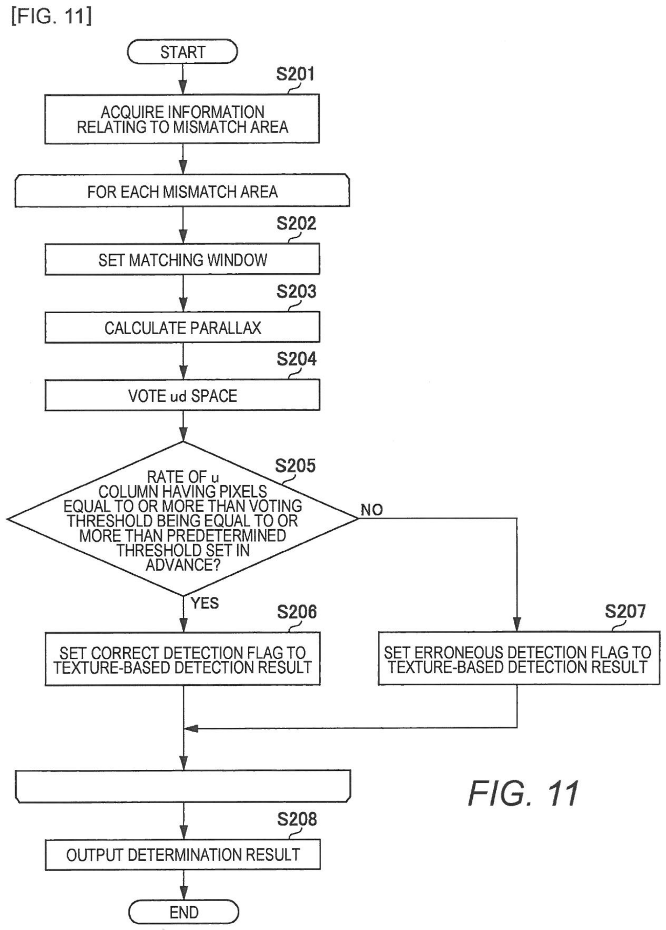

Next, the mismatch area analysis processing by the mismatch area analysis unit 240 will be described with reference to FIG. 11.

FIG. 11 is a flowchart illustrating the mismatch area analysis processing.

First, the mismatch area analysis unit 240 acquires information on the mismatch area from the mismatch area extraction unit 230 (S201). Next, the mismatch area analysis unit 240 sets the size of a matching window for scanning the mismatch area (S202). Subsequently, the parallax of the mismatch area is calculated (S203).

Next, the mismatch area analysis unit 240 votes the parallax that is calculated in step S203 to the ud voting space (S204). Then, the mismatch area analysis unit 240 determines whether or not a rate of u columns having pixels in which votes equal to or more than a voting threshold are collected is equal to or more than a predetermined threshold (S205).

When it is determined in step S205 that the rate of the u columns having the pixels where votes equal to or more than the voting threshold are gathered is equal to or more than the predetermined threshold (determination being YES in S205), the mismatch area analysis unit 240 determines that the mismatch area is a detection target and sets a correct detection flag in the texture-based detection result (S206).

On the other hand, when it is determined in step S205 that the rate of the u columns having the pixels where votes equal to or more than the voting threshold are gathered is not equal to or more than the predetermined threshold (determination being NO in S205), the mismatch area analysis unit 240 determines that the detection of the mismatch area is an erroneous detection and sets an error detection flag in the texture-based detection result (S207). The processing in steps S202 to 207 is performed for each mismatch area.

Then, the mismatch area analysis unit 240 outputs the determination result (S208). That is, the mismatch area analysis unit 240 outputs a texture-based detection result in which a correct detection flag is set to the vehicle control device 300 (see FIG. 1). After the processing in S208 is finished, the mismatch area analysis unit 240 finishes the mismatch area analysis processing.

As described above, the mismatch area extraction unit 230 outputs a highly reliable detection result that can be detected by both the texture-based detection unit 210 and the parallax-analysis-based detection unit 220. The mismatch area analysis unit 240 analyzes the mismatch area that is not detected by the parallax-analysis-based detection unit 220 and is detected by the texture-based detection unit 210, and outputs a detection result indicating that the area is a three-dimensional detection target.

Both the output result of the mismatch area extraction unit 230 and the output of the mismatch area analysis unit 240 ensure consistency because the presence of the target is confirmed from both viewpoints of the texture and the three-dimensional structure. According to this embodiment, the presence or absence of a target object can be determined with high accuracy using two types of detection results. The vehicle control device 300 controls a traveling state of the vehicle 1 in accordance with such an output result. As a result, an erroneous operation of a vehicle control system can be suppressed.

Further, the mismatch area analysis unit 240 determines the presence or absence of the target object by other approaches with respect to the mismatch area where the texture-based detection unit 210 detects the target object. As a result, the determination accuracy of the presence or absence of the target object can be enhanced by effectively using the detection performance of the texture base.

2. <Second embodiment>

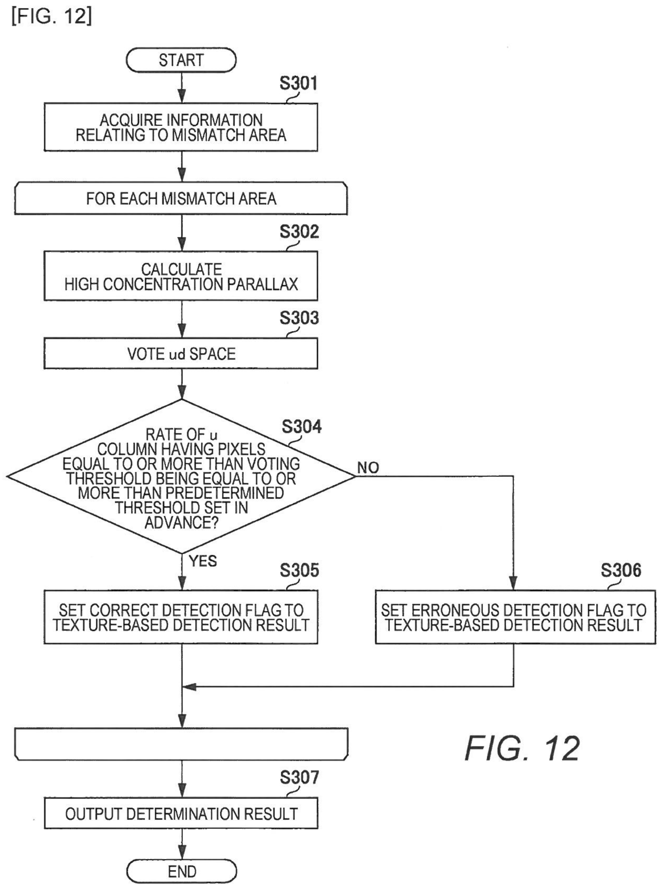

An image processing device and a method of processing an image according to a second embodiment will be described with reference to FIG. 12.

FIG. 12 is a flowchart illustrating a mismatch area analysis processing according to the second embodiment.

The image processing device according to the second embodiment has the same configuration as the image processing device 200 according to the first embodiment. A point that makes the image processing device according to the second embodiment differ from the image processing device 200 is that matching area analysis processing by a mismatch area analysis unit 240. Accordingly, the matching area analysis processing according to the second embodiment will be described hereinafter, and the description of the configuration and processing shared in common with the first embodiment will be omitted.

The mismatch area analysis unit 240 according to the second embodiment selects a technique of calculating a parallax with higher accuracy than a parallax image outputted from an in-vehicle camera 100, and analyzes a mismatch area in detail.

As a technique of outputting a highly accurate parallax, a technique based machine learning such as a semi global matching (SGM) and a convolutional neural network (CNN) can be named. The mismatch area analysis unit according to the present invention may use any other technique that can output a high-accuracy parallax.

The technique for outputting a parallax with high accuracy generally includes a larger number of processes (a higher processing cost) than the parallax calculation technique described with reference to FIG. 3. However, the method for outputting the parallax with high accuracy can more accurately calculate the parallax of the area including the detection target. As a result, the mismatch area analysis unit 240 according to the second embodiment can more accurately confirm the presence of the target object.

[Mismatch area analysis processing]

First, the mismatch area analysis unit 240 acquires information on the mismatch area from the mismatch area extraction unit 230 (S301). Next, the mismatch area analysis unit 240 calculates a highly accurate parallax of the mismatch area using a machine learning based technique such as a SGM or a CNN (S302).

Next, the mismatch area analysis unit 240 votes the parallax that is calculated in step S302 to the ud voting space (S303). Then, the mismatch area analysis unit 240 determines whether or not a rate of u columns having pixels in which votes equal to or more than a voting threshold are collected is equal to or more than a predetermined threshold (S304).

When it is determined in step S304 that the rate of the u columns having the pixels where votes equal to or more than the voting threshold are gathered is equal to or more than the predetermined threshold (determination being YES in S304), the mismatch area analysis unit 240 determines that the mismatch area is a detection target and sets a correct detection flag in the texture-based detection result (S305).

On the other hand, when it is determined in step S304 that the rate of the u columns having the pixels where votes equal to or more than the voting threshold are gathered is not equal to or more than the predetermined threshold (determination being NO in S304), the mismatch area analysis unit 240 determines that the detection of the mismatch area is an erroneous detection and sets an error detection flag in the texture-based detection result (S306). The processing in steps S302 to 306 is performed for each mismatch area.

Then, the mismatch area analysis unit 240 outputs the determination result (S307). That is, the mismatch area analysis unit 240 outputs a texture-based detection result in which a correct detection flag is set to the vehicle control device 300 (see FIG. 1). After the processing in S307 is finished, the mismatch area analysis unit 240 finishes the mismatch area analysis processing.

3. 3.Recapitulation

(1) The image processing device 200 according to the above-described embodiment includes the texture-based detection unit 210 (first detection unit), the parallax-analysis-based detection unit 220 (second detection unit), the mismatch area extraction unit 230, and the mismatch area analysis unit 240. The texture-based detection unit 210 detects a target object from an image outputted by the in-vehicle camera 100 (sensor unit). The parallax-analysis-based detection unit 220 detects the target object from the image outputted from the in-vehicle camera 100 by the processing that differs from the processing performed by the texture-based detection unit 210. The mismatch area extraction unit 230 compares a detection result of the texture-based detection unit 210 and a detection result of the parallax-analysis-based detection unit 220, and extracts a mismatch area where the texture-based detection unit 210 detects a target object, and the parallax-analysis-based detection unit 220 fails to detect the target object. The mismatch area analysis unit 240 performs the detection that differs from the detection performed by the texture-based detection unit 210 and the detection performed by the parallax-analysis-based detection unit 220 so as to determine the presence or absence of the target object in the mismatch area.

Accordingly, the presence or absence of the target object can be determined with high accuracy using the detection result of the texture-based detection unit 210 and the detection result of the parallax-analysis-based detection unit 220. Further, with respect to the mismatch area where the texture-based detection unit 210 detects the target object, the texture-based detection unit 210 and the parallax-analysis-based detection unit 220 determine the presence or absence of the target object by the different processing respectively and hence, the determination accuracy of the presence or absence of the target object can be enhanced. That is, the determination accuracy of the presence or absence of the target object can be enhanced by effectively using the high detection performance of the texture base.

(2) Further, the in-vehicle camera 100 (sensor unit) according to the above-described embodiment outputs both a luminance image and a parallax image.

As a result, the image processing device can perform both the detection of a target object using a luminance image and the detection of the target object using a parallax image.

(3) Further, the texture-based detection unit 210 (first detection unit) according to the above-mentioned embodiment detects a target object based on an luminance image outputted from the in-vehicle camera 100 (sensor unit) .

Accordingly, the image processing device can determine the presence or absence of a target object using texture-based high detection performance.

(4) Further, the parallax-analysis-based detection unit 220 (second detection unit) described above detects a target object based on a parallax image outputted from the in-vehicle camera 100 (sensor unit).

Accordingly, a target object can be detected in a three-dimensional form and hence, the size of the detected target object and a distance to the target object can be detected.

(5) Further, in a case where the texture-based detection unit 210 (first detection unit) according to the above-described embodiment outputs a plurality of detection results, the mismatch area extraction unit 230 determines priorities of the plurality of detection results in accordance with at least one of a distance to the vehicle 1, a predicted course of the vehicle 1, a time until a target object collides with the vehicle 1, and tracking information on the target object. Then, the mismatch area extraction unit 230 extracts a mismatch area based on a detection result having the higher priority than the predetermined order.

As a result, an amount of processing that the mismatch area extraction unit 230 performs can be reduced.

(6) The mismatch area analysis unit 240 according to the first embodiment described above sets the matching window size corresponding to the mismatch area and calculates the parallax, and determines the presence or absence of the target object based on the calculation result.

Accordingly, the parallax in the mismatch area can be appropriately calculated and hence, and the accuracy of determining the presence or absence of the target object can be enhanced.

(7) Further, the mismatch area analysis unit 240 according to the first embodiment described above selects a matching window having a size that does not exceed the size of the mismatch area from among a plurality of types of matching windows prepared in advance. Alternatively, the mismatch area analysis unit 240 sets a matching window having a size obtained by dividing the mismatch area. Alternatively, the mismatch area analysis unit 240 sets a matching window having a size that does not exceed the size of the mismatch area based on at least one of a type of the mismatch area and a distance to the mismatch area.

Accordingly, a matching window having a size corresponding to the mismatch area can be easily set.

(8) Further, the mismatch area analysis unit 240 according to the second embodiment calculates a parallax having higher accuracy than a parallax detected by the parallax-analysis-based detection unit 220 (second detection unit) in the mismatch area, and determines the presence or absence of the target object based on the calculation result.

Accordingly, the determination accuracy of the presence or absence of the target object can be improved.

(9) In the image processing method according to the above-described embodiment, the texture-based detection unit 210 (first detection unit) detects the target object based on an image outputted by the in-vehicle camera 100 (sensor unit). Further, the parallax-analysis-based detection unit 220 (second detection unit) detects a target object from an image outputted from the in-vehicle camera 100 in accordance with the processing that differs from the processing performed by the texture-based detection unit 210. Next, the mismatch area extraction unit 230 compares the detection result of the texture-based detection unit 210 and the detection result of the parallax- analysis-based detection unit 220 to each other, the texture-based detection unit 210 detects a target object, and the parallax-analysis-based detection unit 220 extracts a mismatch area in which the target object is not detected. Then, the mismatch area analysis unit 240 performs the detection that differs from the detection performed by the texture-based detection unit 210 and the detection performed by the parallax-analysis-based detection unit 220 so as to determine the presence or absence of the target object in the mismatch area.

Accordingly, the presence or absence of the target object can be determined with high accuracy using the detection result of the texture-based detection unit 210 and the detection result of the parallax-analysis-based detection unit 220. Further, with respect to the mismatch area where the texture-based detection unit 210 detects the target object, the texture-based detection unit 210 and the parallax-analysis-based detection unit 220 determine the presence or absence of the target object by the different processing respectively and hence, the determination accuracy of the presence or absence of the target object can be enhanced. That is, the determination accuracy of the presence or absence of the target object can be enhanced by effectively using the high detection performance of the texture base.

The present invention is not limited to the embodiments described above and illustrated in the drawings, and various modifications can be made without departing from the gist of the invention described in the claims.

Further, the above-described embodiments have been described in detail for facilitating the understanding of the present invention. However, the embodiments are not necessarily limited to the image processing device that includes all configurations described above. A part of the configuration of one embodiment can be replaced with the configuration of another embodiment, and the configuration of another embodiment can be added to the configuration of one embodiment. Further, with respect to parts of the configurations of the respective embodiments, the addition, the deletion and the replacement of other configurations can be made.

In the present specification, although terms such as "parallel" and "orthogonal" are used, but these terms do not strictly mean only "parallel" and "orthogonal", and may be a state of "substantially parallel" or "substantially orthogonal" including "parallel" and "orthogonal" within a range in which the functions of the image processing device can be exhibited.

Reference Signs List

1 vehicle
100 in-vehicle camera (sensor unit)
110 left camera
120 right camera
200 image processing device
210 texture-based detection unit (first detection unit)
220 parallax-analysis-based detection unit (second detection unit)
230 mismatch area extraction unit
240 mismatch area analysis unit
300 vehicle control device

**Claims**

1. An image processing device comprising:

   a first detection unit that detects a target object based on an image outputted by a sensor unit;
   a second detection unit that detects a target object based on an image outputted by the sensor unit by processing that differs from processing performed by the first detection unit; and
   a mismatch area extraction unit that compares a detection result of the first detection unit and a detection result of the second detection unit to each other, and extracts a mismatch area in which the first detection unit detects the target object, and the second detection unit fails to detect the target object; and
   a mismatch area analysis unit that determines presence or absence of the target object in the mismatch area by allowing the first detection unit and the second detection unit to perform different detections from each other.

2. The image processing device according to claim 1,wherein
   the sensor unit outputs both a luminance image and a parallax image.

3. The image processing device according to claim 2, wherein
   the first detection unit is a texture-based detection unit that detects a target object based on the luminance image outputted by the sensor unit.

4. The image processing device according to claim 2, wherein
   the second detection unit is a parallax-analysis-based detection unit that detects a target object from the parallax image outputted by the sensor unit.

5. The image processing device according to claim 1, wherein

   the sensor unit is an in-vehicle camera attached to a vehicle, and
   when the first detection unit outputs a plurality of detection results, the mismatch area extraction unit determines priorities of the plurality of detection results in accordance with at least one of a distance to the vehicle, a predicted course of the vehicle, a time until the target object collides with the vehicle, and tracking information of the target object, and extracts the mismatch area based on a detection result having a higher priority than a predetermined order.

6. The image processing device according to claim 1, wherein
the mismatch area analysis unit sets a size of a matching window corresponding to the mismatch area and calculates a parallax, and determines presence or absence of the target object based on a calculation result.

7. The image processing device according to claim 6, wherein
the mismatch area analysis unit selects a matching window having a size that does not exceed the size of the mismatch area from a plurality of types of matching windows prepared in advance, or sets a matching window having a size obtained by dividing the mismatch area, or sets a matching window having a size that does not exceed the size of the mismatch area based on at least one of a type of the mismatch area and a distance to the mismatch area.

8. The image processing device according to claim 4, wherein the mismatch area analysis unit calculates a parallax having higher accuracy than the parallax of the second detection unit in the mismatch area, and determines the presence or absence of a target object from the calculation result.

9. An image processing method comprising:

detecting, by a first detection unit, a target object based on an image outputted by a sensor unit;
detecting, by the second detection unit, a target object based on an image outputted by the sensor unit by processing that differs from processing performed by the first detection unit;
comparing a detection result of the first detection unit and a detection result of the second detection unit to each other, and extracting a mismatch area in which the first detection unit detects the target object, and the second detection unit fails to detect the target object by a mismatch area extraction unit; and
determining presence or absence of the target object in the mismatch area by allowing the first detection unit and the second detection unit to perform different detections from each other by a mismatch area analysis unit.

[FIG. 1]

## FIG. 1

EP 4 651 073 A1

[FIG. 2]

FIG. 2

DISTANCE MEASUREMENT TARGET

DISTANCE Z

FOCAL LENGTH f

$X_L$

$X_R$

110

120

BASE LENGTH B

[FIG. 3]

FIG. 3

[FIG. 4]

*FIG. 4*

[FIG. 5]

(A) TRAVEL SCENE

## FIG. 5

VEHICLE AREA

(D) (PARALLAX VALUE)

VEHICLE AREA

ROAD SURFACE AREA

ROAD SURFACE AREA

V (VERTICAL IMAGE)

(B) PARALLAX IMAGE

(CLOSER DISTANCE FROM SENSOR, THICKER IMAGES DISPLAYED)

(C) v-disparity MAP

(D) PARALLAX IMAGE FROM WHICH ROAD SURFACE AREA IS REMOVED

(E) DETECTION RESULT BASED ON PARALLAX ANALYSIS BASE

[FIG. 6]

FIG. 6A   CASE WHERE MATCHING WINDOW IS EXCESSIVELY LARGE
WITH RESPECT TO DETECTION TARGET

LEFT IMAGE                RIGHT IMAGE

FIG. 6B   CASE WHERE MATCHING WINDOW IS EXCESSIVELY SMALL
WITH RESPECT TO DETECTION TARGET

[FIG. 7]

*FIG. 7A*

CORRECT DETECTION

ERRONEOUS DETECTION

DETECTION RESULT BASED ON TEXTURE-BASE

*FIG. 7B*

CORRECT DETECTION

NOT DETECTED

DETECTION RESULT BASED ON PARALLAX ANALYSIS BASE

*FIG. 7C*

EXTRACTION RESULT OF MISMATCH AREA

[FIG. 8]

```
                    ( START )
                        │
                        ▼
        ┌──────────────────────────────┐  S101        ┌──────────────────────────────┐  S102
        │   ACQUIRE DETECTION RESULT    │              │   ACQUIRE DETECTION RESULT    │
        │     BASED ON TEXTURE-BASE     │              │ BASED ON PARALLAX ANALYSIS BASE │
        └──────────────────────────────┘              └──────────────────────────────┘
                        │                                              │
                        ▼                                              │
    ┌──────────────────────────────────────┐                          │
    │ FOR EACH TEXTURE-BASED DETECTION RESULT │                        │
    └──────────────────────────────────────┘                          │
                        │◄─────────────────────────────────────────────┘
                        ▼
    ┌──────────────────────────────────────┐
    │       FOR EACH PARALLAX ANALYSIS      │
    │         BASE DETECTION RESULT         │
    │  WHERE ASSOCIATED FLAG IS NOT YET SET │
    └──────────────────────────────────────┘
                        │                S103
                        ▼
        ┌──────────────────────────────┐
        │        CALCULATE IoU          │
        └──────────────────────────────┘
                        │
                        ▼              S104
                    ◇ IoU BEING ◇
              EQUAL TO OR MORE THAN ──── YES ──────────────────┐
                    THRESHOLD?                                 │
                        │ NO                                   │
                        ▼                                      │
        ┌──────────────────────────────┐                      │
        │                              │                      │
        └──────────────────────────────┘                      │
                        │                S107                  │                S105
                        ▼                                      ▼
        ┌──────────────────────────────┐      ┌──────────────────────────────┐
        │    SET MISMATCH AREA FLAG TO  │      │   SET CORRECT DETECTION FLAG TO │
        │ TEXTURE-BASED DETECTION RESULT │      │ TEXTURE-BASE DETECTION RESULT   │
        └──────────────────────────────┘      └──────────────────────────────┘
                        │                                      │                S106
                        │                                      ▼
                        │                      ┌──────────────────────────────┐
                        │                      │  SET ASSOCIATED FLAG TO PARALLAX │
                        │                      │ ANALYSIS BASE DETECTION RESULT  │
                        │                      └──────────────────────────────┘
                        │◄─────────────────────────────────────┘
                        ▼
        ┌──────────────────────────────┐
        │                              │
        └──────────────────────────────┘
                        │                S108
                        ▼
        ┌──────────────────────────────┐
        │   OUTPUT DETERMINATION RESULT │
        └──────────────────────────────┘
                        │
                        ▼
                    (  END  )
```

FIG. 8

21

[FIG. 9]

ACQUIRE LATERAL WIDTH w AND VERTICAL WIDTH h OF MISMATCH AREA

FIG. 9A

SELECTION OF MATCHING WINDOW

|  | LATERAL [pix] | VERTICAL [pix] | SELECTION CONDITION |
|---|---|---|---|
| SIZE 1 | w1 | h1 | w > w1 AND h > h1 |
| SIZE 2 | w2 | h2 | w > w2 AND h > h2 |
| SIZE 3 | w3 | h3 | w > w3 AND h > h3 |

FIG. 9B

w1 < w2 < w3, h1 < h2 < h3

RECALCULATION OF PARALLAX OF MISMATCH AREA

FIG. 9C

LEFT SCREEN

RIGHT SCREEN

SELECTED MATCHING WINDOW

CONFIRMATION OF PRESENCE OF TARGET

u

v

PARALLAX IMAGE OF MISMATCH AREA

FIG. 9D

u

d

ud VOTING SPACE

[FIG. 10]

METHOD OF DIVIDING SIZE OF MISMATCH AREA

FIG. 10A

METHOD OF SETTING BASED ON TYPE AND DISTANCE

FIG. 10B

[FIG. 11]

```
                    ┌─────────────┐
                    │    START    │
                    └──────┬──────┘
                           │        S201
              ┌────────────▼────────────┐
              │   ACQUIRE INFORMATION   │
              │ RELATING TO MISMATCH AREA│
              └────────────┬────────────┘
                           │
        ┌──────────────────▼──────────────────┐
        │        FOR EACH MISMATCH AREA        │
        └──────────────────┬──────────────────┘
                           │        S202
              ┌────────────▼────────────┐
              │    SET MATCHING WINDOW   │
              └────────────┬────────────┘
                           │        S203
              ┌────────────▼────────────┐
              │    CALCULATE PARALLAX    │
              └────────────┬────────────┘
                           │        S204
              ┌────────────▼────────────┐
              │      VOTE ud SPACE       │
              └────────────┬────────────┘
                           │
                      S205
                   ◇ RATE OF u ◇
            COLUMN HAVING PIXELS
        EQUAL TO OR MORE THAN VOTING ──NO──┐
        THRESHOLD BEING EQUAL TO OR        │
        MORE THAN PREDETERMINED            │
            THRESHOLD SET IN               │
                ADVANCE?                   │
                   │                       │
                  YES    S206              │       S207
    ┌──────────────▼──────────────┐  ┌─────▼────────────────────────┐
    │ SET CORRECT DETECTION FLAG TO│  │ SET ERRONEOUS DETECTION FLAG TO│
    │ TEXTURE-BASED DETECTION RESULT│ │ TEXTURE-BASED DETECTION RESULT │
    └──────────────┬──────────────┘  └─────┬────────────────────────┘
                   │◄───────────────────────┘
    ┌──────────────▼──────────────┐
    │                             │
    └──────────────┬──────────────┘
                   │        S208
    ┌──────────────▼──────────────┐
    │  OUTPUT DETERMINATION RESULT │
    └──────────────┬──────────────┘
            ┌───────▼───────┐
            │      END      │
            └───────────────┘
```

FIG. 11

24

[FIG. 12]

```
                    ┌──────────────┐
                    │    START     │
                    └──────┬───────┘
                           │            S301
            ┌──────────────▼──────────────┐
            │    ACQUIRE INFORMATION       │
            │  RELATING TO MISMATCH AREA   │
            └──────────────┬──────────────┘
                           │
    ┌──────────────────────▼──────────────────────┐
    │          FOR EACH MISMATCH AREA              │
    └──────────────────────┬──────────────────────┘
                           │            S302
            ┌──────────────▼──────────────┐
            │         CALCULATE            │
            │  HIGH CONCENTRATION PARALLAX │
            └──────────────┬──────────────┘
                           │            S303
            ┌──────────────▼──────────────┐
            │        VOTE ud SPACE         │
            └──────────────┬──────────────┘
                           │
                     ╱─────▼─────╲      S304
                   ╱   RATE OF u    ╲
                 ╱ COLUMN HAVING PIXELS ╲
               ╱ EQUAL TO OR MORE THAN VOTING╲   NO
             ◄ THRESHOLD BEING EQUAL TO OR      ►────────┐
               ╲ MORE THAN PREDETERMINED     ╱           │
                 ╲ THRESHOLD SET IN        ╱             │
                   ╲   ADVANCE?          ╱               │
                     ╲─────┬─────╱                       │
                       YES │          S305          S306 │
        ┌──────────────────▼──────────────┐  ┌───────────▼─────────────────┐
        │ SET CORRECT DETECTION FLAG TO    │  │ SET ERRONEOUS DETECTION FLAG TO│
        │ TEXTURE-BASED DETECTION RESULT   │  │ TEXTURE-BASED DETECTION RESULT │
        └──────────────────┬──────────────┘  └───────────┬─────────────────┘
                           │◄──────────────────────────────┘
                           │
    ┌──────────────────────▼──────────────────────┐
    │                                              │        FIG. 12
    └──────────────────────┬──────────────────────┘
                           │            S307
            ┌──────────────▼──────────────┐
            │  OUTPUT DETERMINATION RESULT │
            └──────────────┬──────────────┘
                           │
                    ┌──────▼───────┐
                    │     END      │
                    └──────────────┘
```

*FIG. 12*

## INTERNATIONAL SEARCH REPORT

International application No.

**PCT/JP2023/034024**

| A. | CLASSIFICATION OF SUBJECT MATTER |
|---|---|

*G06T 7/00*(2017.01)i
FI:    G06T7/00 650B

According to International Patent Classification (IPC) or to both national classification and IPC

| B. | FIELDS SEARCHED |
|---|---|

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/070250 A1 (NEC CORPORATION) 07 April 2022 (2022-04-07) claims 1-9 | 1-9 |
| A | WO 2022/080049 A1 (HITACHI ASTEMO, LTD.) 21 April 2022 (2022-04-21) claims 1-10 | 1-9 |
| A | JP 2005-165421 A (DENSO CORPORATION) 23 June 2005 (2005-06-23) claims 1-11 | 1-9 |
| A | JP 2015-70426 A (SONY CORPORATION) 13 April 2015 (2015-04-13) claims 1-10 | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/034024**

| Patent document cited in search report | | | Publication date (day/month/year) | Patent family member(s) | | | Publication date (day/month/year) |
|---|---|---|---|---|---|---|---|
| WO | 2022/070250 | A1 | 07 April 2022 | (Family: none) | | | |
| WO | 2022/080049 | A1 | 21 April 2022 | CN claims 1-10 | 116348937 | A | |
| JP | 2005-165421 | A | 23 June 2005 | US claims 1-16 DE | 2005/0125154 102004052242 | A1 A1 | |
| JP | 2015-70426 | A | 13 April 2015 | US claims 1-17 CN | 2015/0093032 104519271 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005165421 A